Europäisches Patentamt

European Patent Office

Office européen des brevets

(11) Publication number: **0 404 321**
**A2**

## EUROPEAN PATENT APPLICATION

(21) Application number: **90304880.9**

(22) Date of filing: **04.05.90**

(51) Int. Cl.⁵: **G01N 1/02, B01L 3/02**

(30) Priority: **04.05.89 US 347521**

(43) Date of publication of application:
**27.12.90 Bulletin 90/52**

(84) Designated Contracting States:
**AT BE CH DE DK ES FR GB GR IT LI LU NL SE**

(71) Applicant: **Exact Science, Inc.**
**10320 USA Today Way**
**Miramar, Florida 33025(US)**

(72) Inventor: **Longman, Millard**
**8833 N.W. 75 Court**
**Tamarac, Florida 33321(US)**
Inventor: **Proni, Oscar**
**4501 Monroe Street**
**Hollywood, Florida 33021(US)**

(74) Representative: **Lucas, Brian Ronald et al**
**Lucas, George & Co. 135 Westhall Road**
**Warlingham Surrey CR3 9HJ(GB)**

(54) **Cam-driven flow system for use with analytical instruments.**

(57) A liquid transport system is provided having a plurality of functional system elements mechanically controlled by a corresponding plurality of cam elements designed relative to one another such that their rotation about a common shaft causes each of the plurality of system elements to perform its intended function at the precise time required for carrying out the transport cycle. Optically encoded indication means provides rotational position infor- mation of the cam shaft to a motor controller which, based on this information, maintains a driver motor in a proper state.

FIG.I

# CAM-DRIVEN FLOW SYSTEM FOR USE WITH ANALYTICAL INSTRUMENTS

This invention relates to an apparatus and method for effecting liquid transport in liquid flow systems commonly used in medical analytical instruments and in particular to use of a coordinated cam-driven scheme to effect flow therein.

## BACKGROUND oF THE INVENTION

Early liquid handling devices used in hematology analysis, such as the well known Coulter Counters®, use a system of manually operated stopcock controls in conjunction with a simple vacuum pump to move liquid through the system. In current conventional liquid transportation devices, such as automated counters, liquid movement within the system is controlled by electrically driven pinch valves in conjunction with large capacity pumps capable of generating the necessary pressure or vacuum condition within the system.

Typically, the timing of the pinch valve operation is accomplished electronically or by a series of cams which operate to turn on and off electrical contacts which in turn operate motors to effect system junctions. The electric drivers are responsive to the timing mechanism. In these known systems, the electric drivers effect operation of the pinch valves.

These systems are deficient in that they are expensive to manufacture and have high maintenance costs.

Therefore, a need exists for a fluid transportation system which is reliable, inexpensively manufactured and easily maintained. It is an object of at least preferred embodiments of the present invention to provide a system which satisfies this need by its simple yet precisely functional operation.

It is a further object of at least preferred embodiments of this invention to eliminate the need for electronic drivers or electronic timing controls in a liquid flow system.

In at least preferred embodiments these and other objects are achieved by a liquid transport system having a plurality of functional system elements mechanically controlled by a corresponding plurality of cam elements designed relative to one another such that their rotation about a common shaft causes each of the plurality of system elements to perform its intended function at the precise time required for carrying out the transport cycle. Optically encoded indication means provide rotational position information of the cam shaft to a motor controller which, based on this information, maintains a driver motor in a proper state.

## BRIEF DESCRIPTION OF THE DRAWINGS

In the following description of a preferred embodiment of the invention, reference is had to the accompanying drawings, in which:

Fig. 1 is a plan view of the liquid transport system of the present invention; and

Figs. 2A-2C are front elevational views at various stages of operation of the system of Fig. 1.

## DETAILED DESCRIPTION oF THE PREFERRED EMBODIMENT

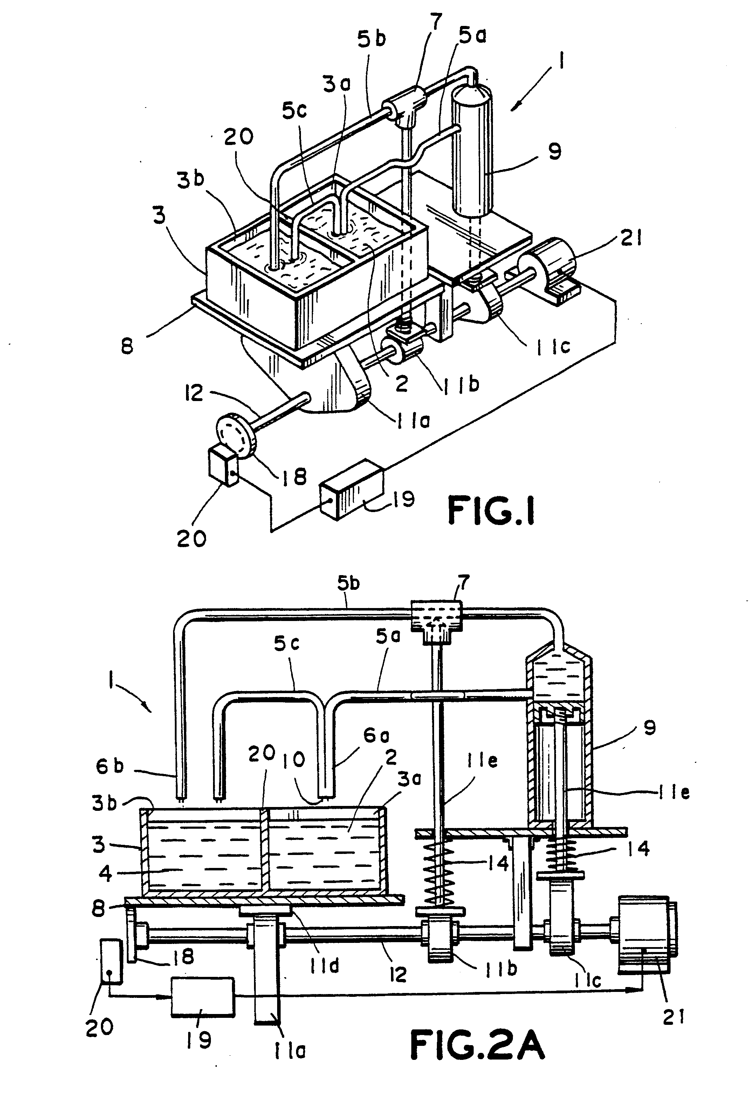

In Fig. 1, the liquid transport system is generally referred to by numeral 1 and includes a sample liquid 2 housed in container 3. container 3 is divided by wall 20 into two reservoirs 3a and 3b. The liquid sample 2 resides in reservoir 3a while a reagent 4 is housed in reservoir 3b. In a common example, the liquid is a diluted blood sample to be analyzed for red and white blood cell counts and the reagent is an isotonic solution of salt water.

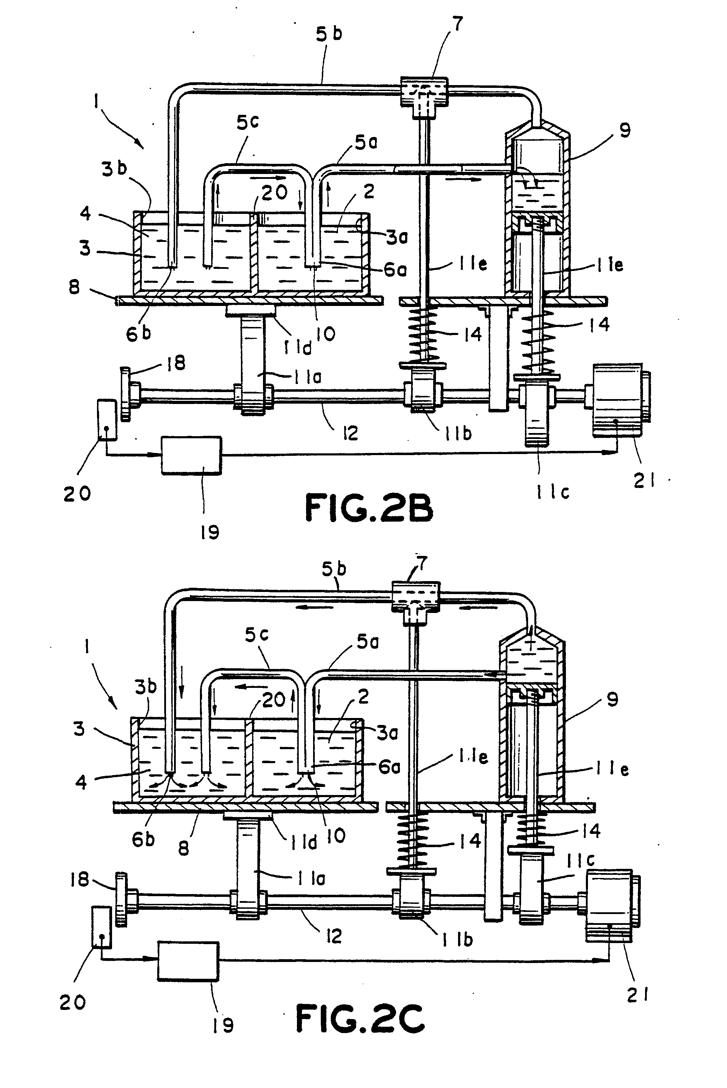

Referring also to Figs 2A and 2B, a first liquid path is defined by a tube 5a having open end 6a for immersion in the liquid 2 and a second end in contact with pump 9. Open end 6a is provided with a conventional metering aperture 10. The metering aperture 10 typically has a sensor (not shown) associated with it for counting the amount of analyte passing by it. Also not shown are the associated counting electronics. A second liquid path is defined by a tube 5b having a first apertured end 6b immersed in the reagent 4 and a second end also in contact with pump 9. A pinch valve 7 is disposed along the second liquid path to restrict liquid flow from the reservoir 3b to the pump 9. A third liquid path is defined by interconnecting tube 5c which allows liquid contact between reservoirs 3a and 3b at a point just behind the metered aperture 10.

In the simple example shown in Fig. 1, three functional system elements are shown for the purpose of illustration. Again, those of ordinary skill in the art will realize that the system of the present invention could be expanded to include any number or types of devices, such as bellows pumps, other platforms and other system controls, for performing any number of system functions.

A series of cams 11a, 11b and 11c are disposed along a common cam shaft 12 relative to the position of platform 8, pinch valve 7 and piston pump 9. The platform 8, pinch valve 7 and piston pump 9 are mechanically coupled to the cams 11a, 11b and 11c by cam followers 11d, 11e and 11f. The cam followers translate the rotational movement of the cams to translational movement in order to cause the mechanically coupled system element to perform its intended function. Activation and maintenance of the performance of each system element is coordinated by the relative shape of each cam to the other. It is easily understood that one or more elements may need to be activated during the operative cycle of one or more of the other system elements in order to synchronize the instrument cycle.

The cam followers 11d, 11e and 11f may be integrated with the bottoms of platform 8, pinch valve 7 and piston pump 9, respectively, or they may be separate elements attached in an appropriate manner. The contact force required to hold cam followers 11d, 11e and 11f in intimate contact with the cams 11a, 11b and 11c, respectively, is supplied by appropriate means such as springs 14. The method of contact is not critical, the only requirement for the cam follower-system element connection is that the cam follower engage with a portion of the system element which can be mechanically manipulated to cause the element to perform its intended function.

Cams 11a, 11b and 11c are designed such that the contact of the cam followers, as they follow the circumferential path of the rotating cams, causes the corresponding system element to perform its intended function at the necessary time in the liquid transport cycle. In a typical cycle, cam 11a will first raise platform 8 to immerse the apertured ends of the tubes in the liquids, as shown in Fig 2B. The cam 11b closes valve 7 and then cam 11c activates pump 9 to draw a predetermined amount of liquid 2 from the reservoir 3a through aperture 10 into tube 5a, while preventing liquid from being drawn into tube 5b from reservoir 3b. Typically, the liquid flow is reversed as in Fig. 2C, after a satisfactory amount of liquid has been drawn, in order to pump the sampled liquid back into the reservoirs 3a and 3b, which may thereafter be discarded along with their contents. Cam 11b is designed such that pinch valve 7 is opened before cam 11c causes pump 9 to reverse the liquid flow. Cam 11a can then lower platform 8 to complete the cycle as shown in Fig. 2A. The system may also be designed to route the liquid drawn from the container 3 through a series of pinch valves to a waste container (not shown).

In order to stop, start and reverse the direction of the motor 21 there is provided a controller 19. The motor 21 turns at a constant speed of one shaft revolution per instrument cycle. Preferably, the controller 19 is configured such that it cannot change the speed of the motor 21 during an instrument cycle. It is to be understood that the speed of the motor may be varied between cycles or before operation.

The control of motor 21 and thus the coordination of the instrument cycle is effected by controller 19 with input from an optical encoder 18 and corresponding sensing means 20. The rotational position of the shaft, as indicated by the relative position of the optically encoded element 18, is detected by the optical sensor and interpreted by the controller 19 as an associated stage in the instrument cycle. Predetermined controller outputs are sent to motor 21 based on the rotational position information obtained from the optical encoder 18. The number of shaft positions indicated by the optical encoder 18 is a matter of design, based on the configuration and application of the system 1.

## Claims

1. A liquid transport system for use with an analytical instrument comprising:
liquid source means for housing a sample liquid;
liquid conduit means for defining a liquid path for transport of said liquid from said liquid source means;
a plurality of system elements disposed along said liquid path, each of said elements having a specified function in an operative cycle of the analytical instrument;
a plurality of pre-configured cams corresponding respectively to each of said functional system elements, each being disposed in positional proximity to said corresponding system element along a common cam shaft;
means for coupling said functional system elements to said corresponding cams such that the function of each element is mechanically effected by the rotational movement of its corresponding cam at the time in the instrument cycle determined by the cam's pre-configuration; and
means for rotating said common cam shaft, said rotation means being responsive to means for detecting the rotational position of the shaft.

2. The system of claim 1 wherein said rotating means operates at a constant speed of one shaft revolution per instrument cycle.

3. The system of claim 2 wherein said rotating means is a motor.

4. The system of claim 1, 2 or 3 wherein said rotational position detection means comprises an optically encoded element disposed proximate the shaft for indicating a number of specified rotational positions of the shaft and a sensor responsive to said optically encoded element for forwarding said indicated positions of said shaft to a controller for supplying control signals to said rotating means.

5. The system of claim 4 wherein said supplied control signals operate only to start, stop and reverse the direction of the motor.

6. The system of claim 4 wherein said liquid conduit means has a first open end with a metered aperture adapted to be immersed in said liquid.

7. The system of claim 4 wherein said coupling means comprises cam followers contacting said cams to translate the rotational motion of the cams into translational motion for operating the system elements.

8. The system of claim 6 wherein the analytical instrument is used for hematalogy analysis.

9. A device for mechanically effecting the intended function of each of the system elements of an analytical instrument comprising:

a plurality of system elements disposed along a liquid path, each of said elements having a specified function in an operative cycle of the analytical instrument;

a plurality of pre-configured cams corresponding respectively to each of said functional system elements, each being disposed in space relation to said corresponding system element along a common cam shaft;

means for coupling said functional system elements each being disposed in space relation to said corresponding system element along a common cam shaft;

means for coupling said functional system elements to said corresponding cams such that the function of each element is mechanically effected by the rotational movement of its corresponding cam at the time in the instrument cycle determined by the cam's pre-configuration; and

means for rotating said common cam shaft, said rotation means being responsive to means for detecting the rotational position of the shaft.

10. A method for effecting liquid flow in an analytical instrument comprising

supplying a liquid from a liquid source to liquid conduit means which defines a liquid path;

positioning a number of system elements each of which has a specified function in an operative cycle of the analytical instrument along the liquid path;

providing a number of cams corresponding to each of said system elements on a common cam shaft such that each cam is in positional relation to its corresponding system element;

coupling said cams to said system elements;

pre-configuring said cams such that upon rotation of the cam shaft the function of each of the system elements is effected mechanically by the rotational movement of its corresponding cam at the point in the instrument cycle determined by the cam pre-configuration; and

rotating said cam shaft to effect an instrument cycle.

11. The method according to claim 9 further comprising the steps of indicating the rotational position of the shaft to a controller and controlling the rotation of the shaft based on said indicated rotational position.

FIG.1

FIG.2A

**FIG.2B**

**FIG.2C**